# EUROPEAN PATENT SPECIFICATION

(11) **EP 3 814 457 B1**
(45) Date of publication and mention of the grant of the patent: **04.05.2022**
(21) Application number: 19733009.5
(22) Date of filing: 24.06.2019
(51) Int. Cl.: C10L 3/10, C01B 3/34, C01B 3/36

(54) **A PROCESS FOR START-UP OF THE HYDRODESULFURIZATION SECTION OF A NATURAL GAS FIRED REFORMER**
VERFAHREN ZUM STARTEN DES HYDROENTSCHWEFELUNGSABSCHNITTS EINES MIT ERDGAS BEFEUERTEN REFORMERS
PROCESSUS DE DÉMARRAGE DE LA SECTION D'HYDRODÉSULFURATION D'UN REFORMEUR À GAZ NATUREL

(30) Priority: 27.06.2018 DK PA201800302
(43) Date of publication of application: 05.05.2021
(73) Proprietor: Haldor Topsøe A/S, 2800 Kgs. Lyngby (DK)
(72) Inventor: DAHL, Per Juul, 2950 Vedbæk (DK)
(74) Representative: Haldor Topsøe A/S
(86) International application number: PCT/EP2019/066598
(87) International publication number: WO 2020/002192

(56) References cited:
- WO-A1-2006/095127
- US-A1- 2016 107 963

## Description

The present invention relates to a novel process for start-up of a hydrodesulfurization section. In the context of the invention, a "hydrodesulfurization section" can be a part of any industrial plant, e.g. a hydrodesulfurization section with a subsequent natural gas fired reformer and/or natural gas fired heater, such as - but not limited to - ammonia, methanol, hydrogen, syngas or ATR process plants.

Hydrodesulfurization (HDS) is a catalytic chemical process widely used to remove sulfur from natural gas and from refined petroleum products, such as gasoline or petrol, jet fuel, kerosene, diesel fuel and fuel oils. Any sulfur in the hydrocarbon feed is a catalyst poison for most syngas generation processes and for syngas based processes such as the Haber-Bosch ammonia process and the methanol process. Furthermore, the purpose of removing the sulfur, thereby creating products such as ultra-low-sulfur diesel, is to reduce the sulfur dioxide (SO₂) emissions that result from using those fuels in automotive vehicles, aircraft, railroad locomotives, ships, gas or oil burning power plants, residential and industrial furnaces, and other forms of fuel combustion.

Various prior art documents deal with hydrodesulfurization procedures. Thus, US 7.074.375 B2 describes a method for desulfurizing a hydrocarbon gas by selective partial oxidation and adsorption. Further, US 8.187.366 B2 describes desulfurizing natural gas by contacting the gas with an adsorbent, and EP 2 609 175 B1 describes a hydrodesulfurization process with a selected liquid recycle to reduce the formation of recombinant mercaptans.

Traditionally, during start-up of a natural gas reforming section comprising a hydrodesulfurization section, once-through heated natural gas (NG) is used. It is also known in the art that heated NG is recycled in a closed loop wherein desulfurized NG is cycled through at least the waste heat section of a reformer (heating the looped NG) and the hydrodesulfurization section. However, this will result in a desulfurization of the catalyst in the hydrogenation part of the hydrodesulfurization section, which will have a negative impact on the efficiency of the hydrogenation once heated.

A normal methanol plant start-up requires around 9 to 14 hours to heat the hydrodesulfurization section to an optimum temperature to activate the hydrodesulfurization catalyst before feeding NG to the reformer for further processing. Since NG is being used for heating and, in the once-through case, is also concurrently being vented to flare, the existing start-up process wastes substantial amounts of NG. This has a negative impact on the environment, and it also reduces the overall efficiency of the plant.

Accordingly, what is needed is a process which efficiently recycles NG rather than venting the NG to the flare system. Recycling of NG until the hydrodesulfurization section reaches the required temperature increases the overall plant efficiency, enhances the production, saves significant amounts of NG and reduces the carbon footprint of the plant. This is the subject of US patent 9.708.235 B2.

However, the method described in US 9.708.235 B2 has the negative consequence that the hydrogenator catalyst will be desulfurized, which in turn has the consequence that the catalyst loses its ability to hydrogenate. This will inevitably have a negative influence on the running of the plant after heating-up or, alternatively, it will make an addition of sulfur to the hydrogenator necessary.

It has now turned out that this phenomenon can be avoided if a part of the recycle NG is split off and used as fuel in the feed reformer. This is advantageous because sulfur-containing NG is constantly being fed to the heating-up loop and, at the same time, any passage of NG to flare is avoided because part of the desulfurized NG simply replaces sulfur-containing NG fuel to the reformer.

Another advantage of this alternative procedure is that the emission of sulfur is markedly reduced.

In a first aspect of the present invention, a process is provided, by which the desulfurization of the catalyst in the hydrogenation part of the hydrodesulphurization section is avoided.

In a second aspect of the present invention, a process is provided, which limits the sulfur emission through flue gas from the reforming section.

In a third aspect of the present invention, a process is provided, which limits the CO₂ emission through flue gas from the reforming section.

These and other advantages are provided by a process for the start-up of a hydrodesulfurization section, comprising the steps of
- providing a natural gas feed,
- passing the natural gas feed through the waste heat section of a reformer, thereby heating the natural gas feed,
- passing the heated natural gas feed through a hydrodesulfurization section, thereby heating the hydrodesulfurization section while producing a desulfurized natural gas stream, and
- providing a part of the desulfurized natural gas stream as fuel for the reformer and recycling the remainder of the desulfurized natural gas to at least one point upstream the waste heat section.

When a part of the desulfurized natural gas is used as fuel for the reformer, a flow of fresh natural gas is required in order to maintain a natural gas flow in the start-up loop. As the fresh natural gas flow contains sulfur, the desulfurization of the dehydrogenation catalyst in the hydrodesulfurization section is avoided. Furthermore, since desulfurized natural gas from the hydrodesulfurization section is used as reformer fuel, the sulfur emission via the flue gas is very limited. Also, as the flue gas contains no sulfur or has a very limited sulfur content, the temperature of the flue gas can be kept lower, thereby reducing the CO₂ emission from the reforming section.

Preferably the flow of the natural gas feed is maintained high enough to ensure that desulfurization of the dehydrogenation catalyst in the hydrodesulfurization section is avoided. The flow of the natural gas feed may be varied or remain constant as long as the flow of the natural gas feed during the start-up of the hydrodesulfurization section is high enough to ensure that the hydrogenation catalyst is sulfurized when the desired temperature of the hydrodesulfurization section is achieved. It is especially preferred that the flow of fresh natural gas feed ensures a sulfur average content above 0.05 ppm at the inlet to the hydrogenator.

In preferred embodiments, the start-up process is continued until the temperature of the desulfurized natural gas that is leaving the desulfurizing section (i.e. the temperature of the hydrodesulfurization section) is between 300 and 400°C, typically 360°C, whereupon the remainder of the desulfurized natural gas is provided as feed for the reformer, and the reforming section is started.

The present process for start-up of a hydrodesulfurization section may be used in any plant or in connection with any technology, in which a hydrodesulfurization section is succeeded by a natural gas fired reformer or heater, such as an ammonia, methanol, hydrogen, syngas or ATR plant or process.

Exemplary values for natural gas (NG) flow, sulfur (S) content and temperature of streams in the heating loop are provided in Table 1 below. As can be seen from the numbers, the natural gas leaving the loop as reformer fuel (4) is replenished by fresh natural gas feed (1).

**Table 1**

| | 1 | 2 | 3 | 4 | 5 |
|---|---|---|---|---|---|
| | NG feed | NG feed plus recycle | Recycle | Fuel | desulfurized NG to reformer |
| NG flow, Nm³/h | 1500 | 30000 | 28500 | 1500 | 0 |
| S | 20 | 1 | 0 | 0 | 0 |
| content, ppm | | | | | |
| Temperature, °C | 40 | 50 | 300 | 100 | - |

When the flue gas from the reformer has a very low content of sulfur (ideally contains no sulfur at all), then it is possible to operate the reformer with a lower reformer flue gas exit temperature. This means that NG consumption as well as CO₂ emission can be reduced.

Among the main differences from what was previously known is the fact that a part of the desulfurized recycle NG stream is used as fuel for the reformer. This way it is made sure that sulfur-containing NG is constantly sent to the hydrogenator, whereby the catalyst is kept active and ready for use all the time.

## Claims

1. A process for the start-up of a hydrodesulfurization section, comprising the steps of
- providing a natural gas (NG) feed,
- passing the natural gas feed through the waste heat section of a reformer, thereby heating the natural gas feed,
- passing the heated natural gas feed through a hydrodesulfurization section comprising a hydrogenation part, thereby heating the hydrodesulfurization section while producing a desulfurized natural gas stream, and
- providing a part of the desulfurized natural gas stream as fuel for the reformer,
wherein sulfur-containing NG is constantly sent to the hydrogenator and recycling the remainder of the desulfurized natural gas to at least one point upstream the waste heat section.

2. Process according to claim 1, wherein the flow of fresh natural gas feed ensures a sulfur average content above 0.05 ppm at the inlet to the hydrogenator.

3. Process according to claim 1 or 2, wherein the start-up process is continued until the temperature of the desulfurized natural gas that is leaving the desulfurizing section, which is the temperature of the hydrodesulfurization section, is between 300 and 400°C, typically 360°C, whereupon the remainder of the desulfurized natural gas is provided as feed for the reformer, and the reforming section is started.

## Patentansprüche

1. Verfahren zum Anfahren eines Hydroentschwefelungsabschnitts, umfassend die Schritte
- Bereitstellung einer Erdgas(NG)einspeisung,
- Leiten der Erdgaseinspeisung durch den Abwärmeabschnitt eines Reformers, wodurch die Erdgaseinspeisung erhitzt wird,
- Leiten der erhitzten Erdgaseinspeisung durch einen Hydroentschwefelungsabschnitt, der einen Hydrierungsabschnitt umfasst, wodurch der Hydroentschwefelungsabschnitt erhitzt wird, während ein entschwefelter Erdgasstrom erzeugt wird, und
- Bereitstellen eines Teils des entschwefelten Erdgasstroms als Brennstoff für den Reformer,
wobei Schwefel enthaltendes NG permanent in die Hydriervorrichtung geführt wird und Recyceln des Rests des entschwefelten Erdgases zu mindestens einem Punkt stromaufwärts des Abwärmeabschnitts.

2. Verfahren gemäß Anspruch 1, wobei der Strom der frischen Erdgaseinspeisung einen durchschnittlichen Schwefelgehalt von über 0,05 ppm am Einlass zu der Hydriervorrichtung gewährleistet.

3. Verfahren gemäß Anspruch 1 oder 2, wobei das Anfahrverfahren fortgesetzt wird, bis die Temperatur des entschwefelten Erdgases, das den Entschwefelungsabschnitt verlässt, welche die Temperatur des Hydroentschwefelungsabschnitts ist, zwischen 300 und 400 °C liegt, typischerweise bei 360 °C, woraufhin der Rest des entschwefelten Erdgases als Einspeisung für den Reformer bereitgestellt und der Reformierungsabschnitt gestartet wird.

## Revendications

1. Procédé pour le démarrage d'une section d'hydrodésulfuration, qui comprend les étapes dans lesquelles:
- on procure une charge d'alimentation de gaz naturel (NG),
- on fait passer la charge d'alimentation de gaz naturel à travers la section de chaleur résiduelle d'un reformeur, dans le but de chauffer de cette manière la charge d'alimentation de gaz naturel,
- on fait passer la charge d'alimentation de gaz naturel chauffée à travers une section d'hydrodésulfuration qui comprend une partie d'hydrogénation, pour ainsi chauffer la section d'hydrodésulfuration tout en générant un courant de gaz naturel désulfuré, et
- procurer une partie du courant de gaz naturel désulfuré à titre de combustible pour le reformeur,
dans lequel le NG qui contient du soufre est envoyé de manière constante au dispositif d'hydrogénation et on recycle le reste du gaz naturel désulfuré en direction d'au moins un point situé en amont de la section de chaleur résiduelle.

2. Procédé selon la revendication 1, dans lequel le courant de la charge fraîche de gaz naturel garantit une teneur moyenne en soufre qui est supérieure à 0,05 ppm à l'entrée du dispositif d'hydrogénation.

3. Procédé selon la revendication 1 ou 2, dans lequel le procédé de démarrage se poursuit jusqu'à ce que la température du gaz naturel désulfuré qui quitte la section de désulfuration, à savoir la température de la section d'hydrodésulfuration, se situe entre 300 et 400 °C, typiquement à 360 °C, après quoi, le reste du gaz naturel désulfuré est fourni sous la forme d'une charge d'alimentation pour le reformeur, et la section de reformage est démarrée.
